# EUROPÄISCHE PATENTSCHRIFT

(11) **EP 4 158 431 B1**
(45) Veröffentlichungstag und Bekanntmachung des Hinweises auf die Patenterteilung: **01.11.2023**
(21) Anmeldenummer: 21724623.0
(22) Anmeldetag: 06.05.2021
(51) Int. Cl.: G05B 19/418

(54) **WARTUNGSPLANUNGSSYSTEM, VERFAHREN UND COMPUTERPROGRAMM ZUR BESTIMMUNG VON WARTUNGSMASSNAHMEN FÜR EINE PRODUKTIONSANLAGE, INSBESONDERE EINER PRODUKTIONSANLAGE DER METALLERZEUGENDEN INDUSTRIE, DER NICHT EISEN- ODER STAHLINDUSTRIE ODER DER VORLEGIERUNGSHERSTELLUNG**
MAINTENANCE PLANNING SYSTEM, METHOD AND COMPUTER PROGRAM FOR DETERMINING MAINTENANCE MEASURES FOR A PRODUCTION INSTALLATION, IN PARTICULAR A PRODUCTION INSTALLATION IN THE METAL PRODUCTION INDUSTRY, THE NON-FERROUS OR STEEL INDUSTRY OR MASTER ALLOY MANUFACTURE
SYSTÈME DE PLANIFICATION DE MAINTENANCE, PROCÉDÉ ET PROGRAMME D'ORDINATEUR DE DÉTERMINATION DE MESURES DE MAINTENANCE D'UNE INSTALLATION DE PRODUCTION, EN PARTICULIER UNE INSTALLATION DE PRODUCTION DANS L'INDUSTRIE DE PRODUCTION DE MÉTAUX, L'INDUSTRIE DES MÉTAUX NON FERREUX OU D'ACIER OU LA FABRICATION D'ALLIAGE MÈRE

(30) Priorität: 25.05.2020 DE 102020206477
(43) Veröffentlichungstag der Anmeldung: 05.04.2023
(73) Patentinhaber: SMS Group GmbH, 40237 Düsseldorf (DE)
(72) Erfinder: HAEUSLER, Christoph, 47269 Duisburg (DE); SCHULZ, Sebastian, 52074 Aachen (DE); WILK, Claus, 57271 Hilchenbach (DE); MOHR, Christian, 50170 Kerpen (DE)
(74) Vertreter: Kross, Ulrich
(86) Internationale Anmeldenummer: PCT/EP2021/061969
(87) Internationale Veröffentlichungsnummer: WO 2021/239429

(56) Entgegenhaltungen:
- EP-A1- 3 358 431
- EP-A1- 3 547 048
- WO-A2-2018/073422
- DE-A1-102004 036 300

## Beschreibung

Die Erfindung betrifft ein Wartungsplanungssystem für eine Produktionsanlage, insbesondere einer Produktionsanlage der metallerzeugenden Industrie, der nicht-Eisen- oder Stahlindustrie oder der Vorlegierungsherstellung. Die Erfindung betrifft ferner ein Verfahren und Computerprogramm zur Bestimmung von Wartungsmaßnahmen für eine Produktionsanlage, insbesondere einer Produktionsanlage der metallerzeugenden Industrie, der nicht-Eisen- oder Stahlindustrie oder der Vorlegierungsherstellung.

insbesondere betrifft die Erfindung eine Produktionsanlage nach Anspruch 1 und ein Verfahren zur Bestimmung von Wartungsmaßnahmen nach Anspruch 9. Bevorzugte Ausführungsformen sind in den abhängigen Ansprüchen definiert.

Produktionsanlagen der metallerzeugenden Industrie, der nicht-Eisen- oder Stahlindustrie oder der Vorlegierungsherstellung dienen beispielsweise zur Herstellung von Brammen, Blechen, Rohren, Trägern, Schienen, weiteren Profilen oder Bändern aus Metall und Schmiedeprodukte sowie deren Vorprodukten oder zur Durchführung einzelner Arbeitsschritte im Rahmen der Herstellung. Die Produktionsanlage muss dabei eine bestimmte Produktqualität gewährleisten und eine möglichst hohe Produktivität aufweisen. Andererseits unterliegen die in den Produktionsanlagen eingesetzten Maschinen einem Verschleiß und anderen Versagensmechanismen.

Die Produktion in der Produktionsanlage wird mit ausreichendem Vorlauf geplant, mit dem Ziel die Produktivität der Produktionsanlage zu optimieren. Dazu wird beispielsweise der Zeitpunkt von Stillständen zu Wartungsarbeiten so geplant, dass die Produktivität der Produktionsanlage möglichst gering beeinflusst wird.

Die WO 2012/025 438 A1 offenbart ein Verfahren zum Betreiben eines Walzwerks, welches von einem Automatisierungssystem gesteuert wird. Das Walzwerk arbeitet eine vorgegebene Produktionsreihenfolge ab. Der Zustand des Walzwerks wird dabei von einem Zustandsüberwachungssystem überwacht. Auf Basis der Zustandsüberwachung und von Produktionsplanungsdaten werden zukünftig erwartete Zustände des Walzwerks ermittelt, insbesondere Verschleißzustände von Komponenten des Walzwerks. Wird dabei ein vorgegebener Wert überschritten, wird eine Warnmeldung ausgegeben.

Die EP 3 358 431 A1 betrifft die Planung von Produktions- und/oder Wartungsplänen für eine Anlage der Grundstoffindustrie. Ein Produktionsplanungssystem für die Anlage der Grundstoffindustrie ermittelt deren Produktionsplanungsdaten und gibt sie dem Automatisierungssystem der Anlage vor. Ein Zustandsüberwachungssystem ermittelt bisherige und zukünftig erwartete Zustände von Komponenten der Anlage. Ein Qualitätsermittlungssystem ermittelt Zustände von in der Anlage erzeugten und noch zu erzeugenden Ausgangsprodukten und/oder vergangene und zukünftige Zustände der Anlage als Ganzes. Ein Wartungsplanungssystem und/oder das Produktionsplanungssystem nehmen vom Zustandsüberwachungssystem die von diesem ermittelten Zustände der Komponenten der Anlage und vom Qualitätsermittlungssystem die von diesem ermittelten Zustände der Ausgangsprodukte und/oder der Anlage als Ganzes entgegen. Sie berücksichtigen bei der Ermittlung von Wartungsplanungsdaten und/oder der Produktionsplanungsdaten die vom Zustandsüberwachungssystem und vom Qualitätsermittlungssystem entgegengenommenen Daten.

Die aus dem Stand der Technik bekannten Systeme und Verfahren zur Planung von Wartungsarbeiten in einer Produktionsanlage basieren auf der Auswertung des technischen Zustands der Produktionsanlage unter Berücksichtigung der Daten aus dem Produktionsplanungssystem hinsichtlich der zukünftig herzustellenden Produkte.

Der technisch sinnvollste Zeitpunkt einer Wartung der Produktionsanlage resultiert aber nicht zwangsläufig in einem optimalen betriebswirtschaftlichen Betrieb der Produktionsanlage. Dadurch werden Produktionsanlagen ökonomisch suboptimal betrieben und Betreiber können nicht einmal Angaben dazu machen, welche wirtschaftliche Leistungsfähigkeit erreichbar wäre.

Der vorliegenden Erfindung liegt die Aufgabe zugrunde, ein Wartungsplanungssystem und ein Verfahren und Computerprogramm zur Bestimmung von Wartungsmaßnahmen für eine Produktionsanlage bereitzustellen, welche die Wartungsarbeiten in der Produktionsanlage hinsichtlich einer betriebswirtschaftlichen Nutzung der Produktionsanlage optimieren.

Die Aufgabe wird erfindungsgemäß gelöst durch ein Wartungsplanungssystem für eine Produktionsanlage, insbesondere einer Produktionsanlage der metallerzeugenden Industrie, der nicht-Eisen- oder Stahlindustrie oder der Vorlegierungsherstellung, wobei die Produktionsanlage umfasst:
ein Produktionsplanungssystem zur Bestimmung einer Produktionsreihenfolge für die Produktionsanlage, insbesondere von Steuerdaten für ein Automatisierungssystem,
das Automatisierungssystem zur Steuerung der Produktion in der Produktionsanlage, wobei das Automatisierungssystem vorzugsweise die vom Produktionsplanungssystem bestimmte Produktionsreihenfolge ausführt,
ein Zustandsüberwachungssystem zur Erfassung von Zuständen der Produktionsanlage und deren Komponenten, und
ein Unternehmensplanungssystem zur betriebswirtschaftlichen Verwaltung der Produktion und Wartung in der Produktionsanlage.

Das erfindungsgemäße Wartungsplanungssystem ist zur Bestimmung von Wartungsmaßnahmen für die Produktionsanlage ausgebildet ist, insbesondere umfassend eine Auflistung der durchzuführenden Wartungsmaßnahmen, Auflistung der für die durchzuführenden Wartungsmaßnahmen erforderlichen Gegenstände, Auflistung der an den Wartungsmaßnahmen beteiligten Personen und/oder Gerätschäften, einen Zeitplan für die durchzuführenden Wartungsmaßnahmen, Auflistung und/oder Ausführung von Bestellungen von Betriebsmitteln und Ersatzteilen, und dergleichen.

Das erfindungsgemäße Wartungsplanungssystem berücksichtigt bei der Bestimmung der Wartungsmaßnahmen die Informationen des Produktionsplanungssystems, des Automatisierungssystems, des Zustandsüberwachungssystems und des Unternehmensplanungssystems und optimiert die Wartungsmaßnahmen hinsichtlich einer betriebswirtschaftlichen Ausnutzung der Produktionsanlage.

Der Erfindung lieg die Erkenntnis zugrunde, dass die aus dem Stand der Technik bekannte technische Optimierung der Wartungsmaßnahmen nicht gleichbedeutend ist mit einem betriebswirtschaftlichen Betrieb der Produktionsanlage. Selbst wenn es aus technischen Gesichtspunkten sinnvoll erscheint eine Wartungsmaßnahme durchzuführen, ist dies nicht unbedingt betriebswirtschaftlich optimal. Es ist möglich, dass ein Weiterbetrieb der Produktionsanlage ohne Wartung betriebswirtschaftlich günstiger ist. Bei der betriebswirtschaftlichen Optimierung kann beispielsweise berücksichtigt werden, dass Wartungsmaßnahmen zu einem späteren Zeitpunkt zusammengelegt werden können, um die Stillstandzeit oder die Kosten zum Stilllegen und wieder Anfahren der Produktionsanlage zu reduzieren. Dazu berücksichtigt das erfindungsgemäße Wartungsplanungssystem die Daten des Unternehmensplanungssystems und verknüpft diese mit den Daten des Produktionsplanungssystems, des Automatisierungssystems und des Zustandsüberwachungssystems. Die Daten der vorgenannten Systeme werden mit einander verknüpft und betriebswirtschaftlich optimiert.

Beispielsweise können durch die erfindungsgemäße Optimierung der Wartungsmaßnahmen die Kosten für eine Lagerhaltung reduziert werden, da die benötigten Ersatzteile passend zu den optimierten Wartungsmaßnahmen rechtzeitig (just in time) bestellt werden. Dadurch reduziert sich gebundenes Kapital und Beschaffungsprozesse können gegebenenfalls optimiert werden.

Mittels der vorliegenden Erfindung wird die wirtschaftliche Gesamtbilanz der Produktionsanlage, insbesondere im Bereich der Instandhaltung, dynamisch an die aktuelle und in naher Zukunft liegende Belastungssituation optimiert.

Nach einer Variante der Erfindung stellt das Zustandsüberwachungssystem eine Vorhersage von Zuständen der Produktionsanlage und deren Komponenten bereit. Das Wartungsplanungssystem berücksichtigt diese Vorhersage bei der Bestimmung der Wartungsmaßnahmen. Insbesondere können dadurch wahrscheinlich auftretende kritische Zustände identifiziert und durch entsprechende Wartungsmaßnahmen vermieden werden. Dies betrifft insbesondere technisch bedingte zukünftige kritische Zustände der Produktionsanlage, welche durch die Ausführung von Wartungsmaßnahmen verhindert werden können.

In einer erfindungsgemäßen Variante umfasst die vom Produktionsplanungssystem bestimmte Produktionsreihenfolge Informationen darüber, welche Eingangsprodukte der Produktionsanlage zugeführt werden und welche Ausgangsprodukte aus den Eingangsprodukten hergestellt werden, insbesondere in welcher zeitlichen Reihenfolge. Da das Unternehmensplanungssystem beispielsweise Daten über die Verfügbarkeit von Eingangsprodukten, Lagerbeständen, Lieferzeiten, Beschaffungskosten und dergleichen umfasst, kann eine Verknüpfung und Optimierung dieser Daten die betriebswirtschaftliche Nutzung der Produktionsanlage verbessern.

Gemäß einer vorteilhaften Variante der Erfindung umfasst die Produktionsanlage weiterhin ein Qualitätsermittlungssystem zur Erfassung von Produktqualitäten der in der Produktionsanlage hergestellten Produkte. Das Wartungsplanungssystem berücksichtigt vorzugsweise die Informationen des Qualitätsermittlungssystems bei der Bestimmung der Wartungsmaßnahmen. Durch das Qualitätsermittlungssystem werden die tatsächlich erzielten Produktqualitäten erfasst und es kann überprüft werden, ob diese mit den Aufträgen aus dem Produktionsplanungssystem übereinstimmen. Weichen die tatsächlichen Produktqualitäten von den vorgesehenen Produktqualitäten ab, kann dies einen Einfluss auf die Durchführung von Wartungsmaßnahmen haben. Werden beispielsweise höhere tatsächliche Produktqualitäten erzielt, können Wartungsmaßnahmen verschoben werden und bei niedrigeren tatsächlichen Produktqualitäten müssen Wartungsmaßnahmen eventuell vorgezogen werden. Alternativ kann auch die Produktionsreihenreihenfolge angepasst werden, so dass herzustellende Produkte mit hohen Qualitätsanforderungen beispielsweise vorgezogen werden oder auf einen Zeitpunkt nach einer Wartung verschoben werden.

Nach einer Variante des erfindungsgemäßen Wartungssystems stellt das Qualitätsermittlungssystem eine Vorhersage von Produktqualitäten der in der Produktionsanlage hergestellten Produkte bereit. Diese Vorhersage wird vom Wartungsplanungssystem bei der Bestimmung der Wartungsmaßnahmen berücksichtigt. Durch die Vorhersage der Produktqualitäten lässt sich der Betrieb der Produktionsanlage weiter betriebswirtschaftlich optimieren.

In einer zweckmäßigen Variante der Erfindung berücksichtigt das Wartungsplanungssystem bei der Optimierung der betriebswirtschaftlichen Ausnutzung der Produktionsanlage die Kosten für eine Wartungsmaßnahme und die durch die Wartungsmaßnahme erzielten Erträge. Eine derartige betriebswirtschaftliche Betrachtung der Wartungsmaßnahmen ist aus dem Stand der Technik nicht bekannt.

Gemäß einer zweckmäßigen Variante der Erfindung stellt das Unternehmensplanungssystem betriebswirtschaftliche Informationen bereit zu: Materialeinkauf, Ressourceneinkauf, Ersatzteilbeschaffung, Ersatzteilverwaltung, Lieferkosten, Lieferzeiten, Lagerkosten, Personalkosten, oder dergleichen.

In einer vorteilhaften Variante der Erfindung berücksichtigt das Wartungsplanungssystem bei der Optimierung der betriebswirtschaftlichen Ausnutzung der Produktionsanlage die Intensität der Wartungsarbeiten, den Einfluss der Wartungsarbeiten auf die Produktqualität und/oder die Prozessführung, den Personalaufwand, oder dergleichen.

Nach einer besonders bevorzugten Variante der Erfindung optimiert das Wartungsplanungssystem die Wartungsmaßnahmen über die Laufzeit der Produktionsanlage kontinuierlich. Es werden also ständig die Wartungsmaßnahmen optimiert, so dass auch unvorhergesehene Änderungen an oder in der Produktionsanlage oder mit der Produktion im Zusammenhang stehenden Gegebenheiten berücksichtigt und die Wartungsmaßnahmen werden entsprechend angepasst, um einen optimalen betriebswirtschaftlichen Betrieb der Produktionsanlage zu gewährleisten. Zudem verändern sich die Belastungen der Produktionsanlagen, deren Alter, die eingesetzten Ersatzteile und durchgeführten Reparaturen über die Jahre. Eine zu Beginn des Anlagenlebens eingestellte Instandhaltungsstrategie wird im Stand der Technik meistens nicht, in Ausnahmefällen nur manuell, nachgeführt. Somit driften die notwendigen Maßnahmen und die Vorgaben ggf. über die Zeit deutlich auseinander. Durch die kontinuierliche Optimierung gemäß der vorliegenden Erfindung wird dieses Problem vermieden.

Gemäß einer vorteilhaften erfindungsgemäßen Variante erstellt das Wartungsplanungssystem ein digitales Modell der Produktionsanlage. Mittels des digitalen Modells optimiert das erfindungsgemäße Wartungsplanungssystem die Wartungsmaßnahmen hinsichtlich einer betriebswirtschaftlichen Ausnutzung der Produktionsanlage, insbesondere unter Berücksichtigung der Informationen des Produktionsplanungssystems, des Automatisierungssystems, des Zustandsüberwachungssystems und des Unternehmensplanungssystems. Das erstellte Modell bildet dabei insbesondere die Zusammenhänge zwischen den Daten des Unternehmensplanungssystems und den Daten des Produktionsplanungssystems, des Automatisierungssystems und des Zustandsüberwachungssystems ab. Auf Basis der abgebildeten Zusammenhänge wird das erstellte Modell hinsichtlich der betriebswirtschaftlichen Nutzung der Produktionsanlage optimiert. Das digitale Modell ist dabei als digitaler Zwilling der Produktionsanlage ausgebildet und umfasst insbesondere die Informationen des Produktionsplanungssystems, des Automatisierungssystems, des Zustandsüberwachungssystems und des Unternehmensplanungssystems.

In einer besonders bevorzugten Variante trainiert das Wartungsplanungssystem das erstellte digitale Modell kontinuierlich, insbesondere unter Berücksichtigung der Informationen des Produktionsplanungssystems, des Automatisierungssystems, des Zustandsüberwachungssystems und des Unternehmensplanungssystems. Das erstellte digitale Modell wird also kontinuierlich verbessert, wodurch sich die betriebswirtschaftliche Ausnutzung der Anlage verbessert.

Nach einer zweckmäßigen Variante der Erfindung basiert das digitale Modell auf Methoden der künstlichen Intelligenz, insbesondere des maschinellen Lernens oder neuronaler Netze, Entscheidungsbäume, lineare oder nichtlineare Regressionsmodelle, Support-Vector-Machines und/oder der Big Data Analyse.

Gemäß einer Variante der Erfindung übermittelt das Wartungsplanungssystem die bestimmten Wartungsmaßnahmen vor Durchführung der Wartungsmaßnahmen zumindest teilweise an die anderen Systeme der Produktionsanlage, insbesondere an das Produktionsplanungssystem, das Automatisierungssystem, das Zustandsüberwachungssystem, das Unternehmensplanungssystem und/oder das Qualitätsermittlungssystem. Die anderen Systeme der Produktionsanlage können sich somit auf die geplanten Wartungsmaßnahmen einstellen und diese bei der eigenen Planung berücksichtigen.

In einer erfindungsgemäßen Variante erstellt das Wartungsplanungssystem einen anfänglichen Wartungsplan mit Wartungsmaßnahmen oder dem Wartungsplanungssystem wird ein anfänglicher Wartungsplan mit Wartungsmaßnahmen zur Verfügung gestellt. Der anfängliche Wartungsplan beruht beispielsweise auf historischen Daten der Produktionsanlage und/oder auf Daten von vergleichbaren Produktionsanlagen. Der anfängliche Wartungsplan kann auch auf Expertenwissen basieren. Der anfängliche Wartungsplan basiert insbesondere auf eine der folgenden Methoden: Reliability Centered Maintenance (RCM), Failure Mode Effectiveness and Criticality Analysis (FMECA) und Maintenance Engineering basierend auf den Prinzipien der Reliability Centered Maintenance (ME-RCM).

Nach einer vorteilhaften Variante der Erfindung weist das Wartungsplanungssystem eine Benutzerschnittstelle auf, zum Eingeben von Daten eines Benutzers, insbesondere des Wartungspersonals zu durchgeführten Wartungsarbeiten, beobachteten Zuständen oder Defekten der Produktionsanlage, oder dergleichen. Da nicht alle Zustände, Produktqualitäten, durchgeführte Wartungsarbeiten oder dergleichen mittels Sensoren erfassbar sind, können diesbezügliche Daten über eine Benutzerschnittstelle dem erfindungsgemäßen Wartungsplanungssystem zur Verfügung gestellt werden. Dadurch vergrößert sich die Datenbasis zur betriebswirtschaftlichen Optimierung des Betriebs der Produktionsanlage.

Gemäß einer zweckmäßigen erfindungsgemäßen Variante werden von dem Produktionsplanungssystem, dem Automatisierungssystem, dem Zustandsüberwachungssystem, dem Unternehmensplanungssystem und/oder dem Qualitätsermittlungssystem einer oder mehrere der folgenden Parameter ermittelt, überwacht, bestimmt oder dergleichen: Temperaturen, Durchflussmengen, Schieberstellungen, Stromaufnahme, Produktdaten, wie Material, Produktidentifikationsnummern, Drehmomente, Schwingungen, Verschmutzungen, Verschleißzustand, Einsatzhäufigkeit, oder dergleichen.

In einer vorteilhaften Variante der Erfindung ermittelt das Wartungsplanungssystem auf Basis der bestimmten Wartungsmaßnahmen Hauptkostentreiber der Produktionsanlage. Derartige Hauptkostentreiber werden erfindungsgemäß auch als "bad actors" bezeichnet und bei der Bestimmung der Wartungsmaßnahmen besonders berücksichtigt.

Nach einer erfindungsgemäßen Variante erstellt das Wartungsplanungssystem für die Hauptkostentreiber eine spezielle Instandhaltungsstrategie und/oder spezielle Überwachung.

Neben einer besonderen Berücksichtigung der bad actors bei den Wartungsmaßnahmen kann das Wartungsplanungssystem durch die Bestimmung der bad actors auch dazu beitragen, dass diese durch andere Komponenten ausgetauscht werden, so dass derartige Hauptkostentreiber (bad actors) wegfallen und die Produktionsanlage betriebswirtschaftlicher operiert.

Gemäß einer bevorzugten Variante der Erfindung umfasst das Wartungsplanungssystem einen Optimierer, welcher die Wartungsmaßnahmen hinsichtlich einer betriebswirtschaftlichen Ausnutzung der Produktionsanlage optimiert, insbesondere den betriebswirtschaftlich sinnvollsten nächsten Wartungstermin bestimmt. Der Optimierer übernimmt also die Auswertung der zur Verfügung stehenden Daten und bestimmt die betriebswirtschaftlich optimale Ausnutzung der Produktionsanlage.

Zweckmäßigerweise basiert der Optimierer auf Methoden des Operation Research, wie beispielsweise lineare Programme, konvexe Optimierung oder speziell gemischt-ganzzahlige Optimierung, oder des Bestärkenden Lernens, wie beispielsweise tiefe neuronale Netzwerke.

Die Aufgabe wird ferner gelöst durch ein Verfahren zur Bestimmung von Wartungsmaßnahmen für eine Produktionsanlage, insbesondere einer Produktionsanlage der metallerzeugenden Industrie, der nicht-Eisen- oder Stahlindustrie oder der Vorlegierungsherstellung, umfassend die Schritte:
Bestimmen einer Produktionsreihenfolge für die Produktionsanlage, insbesondere von Steuerdaten für ein Automatisierungssystem,
Steuern der Produktion in der Produktionsanlage, insbesondere durch Ausführen der bestimmten Produktionsreihenfolge durch ein Automatisierungssystem,
Erfassen von Zuständen der Produktionsanlage und deren Komponenten,
Erfassen von betriebswirtschaftlichen Informationen zu der Produktion und Wartung in der Produktionsanlage,
Bestimmen von Wartungsmaßnahmen für die Produktionsanlage, insbesondere umfassend eine Auflistung der durchzuführenden Wartungsmaßnahmen, Auflistung der für die durchzuführenden Wartungsmaßnahmen erforderlichen Gegenstände, Auflistung der an den Wartungsmaßnahmen beteiligten Personen und/oder Gerätschäften, einen Zeitplan für die durchzuführenden Wartungsmaßnahmen, Auflistung und/oder Ausführung von Bestellungen von Betriebsmitteln und Ersatzteilen, und dergleichen
Erfindungsgemäß werden bei der Bestimmung der Wartungsmaßnahmen die bestimmte Produktionsreihenfolge, die Steuerung der Produktion, die erfassten Zustände und die erfassten betriebswirtschaftlichen Informationen berücksichtigt und hinsichtlich einer betriebswirtschaftlichen Ausnutzung der Produktionsanlage optimiert.

Die aus dem Stand der Technik bekannte technische Optimierung der Wartungsmaßnahmen ist nicht gleichbedeutend mit einem betriebswirtschaftlich optimierten Betrieb der Produktionsanlage. Nicht jede technisch sinnvolle Wartungsmaßnahme verbessert auch gleichzeitig die betriebswirtschaftliche Nutzung der Produktionsanlage. Im Gegenteil ist es sogar möglich, dass technisch sinnvolle Wartungsmaßnahmen einen negativen Einfluss auf die betriebswirtschaftliche Nutzung der Produktionsanlage haben. Bei der betriebswirtschaftlichen Optimierung kann beispielsweise berücksichtigt werden, dass Wartungsmaßnahmen zu einem späteren Zeitpunkt zusammengelegt werden, um die Stillstandzeit oder die Kosten zum Stilllegen und wieder Anfahren der Produktionsanlage zu reduzieren. Dazu berücksichtigt das erfindungsgemäße Verfahren die betriebswirtschaftlichen Daten eines Unternehmensplanungssystems und verknüpft diese mit den Daten der Produktionsanlage, insbesondere den einzelnen Systemen der Produktionsanlage. Die Daten der vorgenannten Systeme werden mit einander verknüpft und betriebswirtschaftlich optimiert.

Nach einer Variante der Erfindung umfasst das Verfahren zusätzlich den Schritt des Ermittelns einer Vorhersage von Zuständen der Produktionsanlage und deren Komponenten, welche vorzugsweise bei der Bestimmung der Wartungsmaßnahmen berücksichtigt wird. Dadurch können beispielsweise eventuell auftretende kritische Zustände identifiziert und durch entsprechende Wartungsmaßnahmen vermieden werden. Dies betrifft insbesondere technisch bedingte zukünftige kritische Zustände der Produktionsanlage, welche durch die Ausführung von Wartungsmaßnahmen verhindert werden können.

In einer weiteren Variante der Erfindung umfasst die bestimmte Produktionsreihenfolge Informationen darüber, welche Eingangsprodukte der Produktionsanlage zugeführt werden und welche Ausgangsprodukte aus den Eingangsprodukten hergestellt werden, insbesondere in welcher zeitlichen Reihenfolge. Die betriebswirtschaftlichen Informationen zu der Produktion und Wartung in der Produktionsanlage umfassen beispielsweise Daten über die Verfügbarkeit von Eingangsprodukten, Lagerbeständen, Lieferzeiten, Beschaffungskosten und dergleichen. Diese betriebswirtschaftlichen Informationen können mit den Informationen zu der Produktionsreihenfolge verknüpft werden, so dass der betriebswirtschaftliche Betrieb der Produktionsanlage auf Basis dieser Verknüpfung von Daten optimiert werden kann.

Gemäß einer vorteilhaften Variante der Erfindung umfasst das erfindungsgemäße Verfahren weiterhin den Schritt des Ermittelns von Produktqualitäten der in der Produktionsanlage hergestellten Produkte, welche vorzugsweise bei der Bestimmung der Wartungsmaßnahmen berücksichtigt werden. Die erfassten Produktqualitäten können mit den Anforderungen von Kundenaufträgen abgeglichen werden, um die Verwertbarkeit der hergestellten Produkte zu gewährleisten. Weichen die tatsächlichen Produktqualitäten von den vorgesehenen Produktqualitäten ab, kann dies einen Einfluss auf die Durchführung von Wartungsmaßnahmen haben. Werden beispielsweise höheren tatsächliche Produktqualitäten erzielt, können Wartungsmaßnahmen verschoben werden und bei niedrigeren tatsächlichen Produktqualitäten müssen Wartungsmaßnahmen gegebenenfalls vorgezogen werden. Alternativ kann auch die Produktionsreihenreihenfolge angepasst werden, so dass herzustellende Produkte mit hohen Qualitätsanforderungen beispielsweise vorgezogen werden oder auf einen Zeitpunkt nach einer Wartung verschoben werden.

Nach einer weiteren Variante der Erfindung umfasst das Verfahren den Schritt des Ermittelns einer Vorhersage von Produktqualitäten der in der Produktionsanlage hergestellten Produkte, welche vorzugsweise bei der Bestimmung der Wartungsmaßnahmen berücksichtigt wird. Durch die Vorhersage der Produktqualitäten lässt sich der Betrieb der Produktionsanlage weiter betriebswirtschaftlich optimieren.

In einer zweckmäßigen Variante der Erfindung werden bei der Optimierung der betriebswirtschaftlichen Ausnutzung der Produktionsanlage die Kosten für eine Wartungsmaßnahme und die durch die Wartungsmaßnahme erzielten Erträge berücksichtigt. Eine derartige betriebswirtschaftliche Betrachtung der Wartungsmaßnahmen ist aus dem Stand der Technik in nicht bekannt.

Gemäß einer zweckmäßigen Variante der Erfindung umfassen die erfassten betriebswirtschaftlichen Informationen eine oder mehrere der folgenden Informationen: Materialeinkauf, Ressourceneinkauf, Ersatzteilbeschaffung, Ersatzteilverwaltung, Lieferkosten, Lieferzeiten, Lagerkosten, Personalkosten, oder dergleichen.

In einer vorteilhaften Variante der Erfindung werden bei der Optimierung der betriebswirtschaftlichen Ausnutzung der Produktionsanlage die Intensität der Wartungsarbeiten, der Einfluss der Wartungsarbeiten auf die Produktqualität und/oder die Prozessführung, der Personalaufwand, oder dergleichen berücksichtigt.

Nach einer besonders bevorzugten Variante der Erfindung optimiert das Wartungsplanungssystem die Wartungsmaßnahmen über die Laufzeit der Produktionsanlage kontinuierlich. Es werden also ständig die Wartungsmaßnahmen optimiert, so dass auch unvorhergesehene Änderungen an oder in der Produktionsanlage oder mit der Produktion im Zusammenhang stehenden Gegebenheiten berücksichtigt und die Wartungsmaßnahmen werden entsprechend angepasst, um einen optimalen betriebswirtschaftlichen Betrieb der Produktionsanlage zu gewährleisten.

Gemäß einer vorteilhaften erfindungsgemäßen Variante erstellt das Wartungsplanungssystem ein digitales Modell der Produktionsanlage. Mittels des digitalen Modells optimiert das erfindungsgemäße Wartungsplanungssystem die Wartungsmaßnahmen hinsichtlich einer betriebswirtschaftlichen Ausnutzung der Produktionsanlage, insbesondere unter Berücksichtigung der bestimmten Produktionsreihenfolge, der Steuerung der Produktion, der erfassten Zustände und der erfassten betriebswirtschaftlichen Informationen. Das erstellte Modell bildet dabei insbesondere die Zusammenhänge zwischen der bestimmten Produktionsreihenfolge, der Steuerung der Produktion, der erfassten Zustände und der erfassten betriebswirtschaftlichen Informationen ab. Auf Basis der abgebildeten Zusammenhänge wird das erstellte Modell hinsichtlich der betriebswirtschaftlichen Nutzung der Produktionsanlage optimiert. Das digitale Modell ist dabei als digitaler Zwilling der Produktionsanlage ausgebildet und umfasst insbesondere die Informationen des Produktionsplanungssystems, des Automatisierungssystems, des Zustandsüberwachungssystems und des Unternehmensplanungssystems.

In einer besonders bevorzugten Variante trainiert das Wartungsplanungssystem das erstellte digitale Modell kontinuierlich, insbesondere unter Berücksichtigung der bestimmten Produktionsreihenfolge, der Steuerung der Produktion, der erfassten Zustände und der erfassten betriebswirtschaftlichen Informationen. Das erstellte digitale Modell wird also kontinuierlich verbessert, wodurch sich die betriebswirtschaftliche Ausnutzung der Anlage verbessert.

Nach einer zweckmäßigen Variante der Erfindung basiert das digitale Modell auf Methoden der künstlichen Intelligenz, insbesondere des maschinellen Lernens oder neuronaler Netze, Entscheidungsbäume, lineare oder nichtlineare Regressionsmodelle, Support-Vector-Machines und/oder der Big Data Analyse.

Gemäß einer Variante der Erfindung werden die bestimmten Wartungsmaßnahmen vor Durchführung der Wartungsmaßnahmen zumindest teilweise an die Produktionsanlage übermittelt, insbesondere an ein Produktionsplanungssystem, ein Automatisierungssystem, ein Zustandsüberwachungssystem, ein Unternehmensplanungssystem und/oder ein Qualitätsermittlungssystem der Produktionsanlage. Die anderen Systeme der Produktionsanlage können sich somit auf die geplanten Wartungsmaßnahmen einstellen und diese bei der eigenen Planung berücksichtigen.

In einer erfindungsgemäßen Variante wird ein anfänglicher Wartungsplan mit Wartungsmaßnahmen erstellt oder es wird ein anfänglicher Wartungsplan mit Wartungsmaßnahmen zur Verfügung gestellt. Der anfängliche Wartungsplan beruht beispielsweise auf historischen Daten der Produktionsanlage und/oder auf Daten von vergleichbaren Produktionsanlagen. Der anfängliche Wartungsplan kann auch auf Expertenwissen basieren. Der anfängliche Wartungsplan basiert insbesondere auf eine der folgenden Methoden: Reliability Centered Maintenance (RCM), Failure Mode Effectiveness and Criticality Analysis (FMECA) und Maintenance Engineering basierend auf den Prinzipien der Reliability Centered Maintenance (ME-RCM).

Nach einer vorteilhaften Variante der Erfindung umfasst das Verfahren den Schritt einer manuellen Dateneingabe eines Benutzers, insbesondere des Wartungspersonals zu durchgeführten Wartungsarbeiten, beobachteten Zuständen oder Defekten der Produktionsanlage, oder dergleichen. Da nicht alle Zustände, Produktqualitäten, durchgeführte Wartungsarbeiten oder dergleichen mittels Sensoren erfassbar sind, können diesbezügliche Daten über eine Benutzerschnittstelle dem erfindungsgemäßen Verfahren zur Verfügung gestellt werden. Dadurch vergrößert sich die Datenbasis zur betriebswirtschaftlichen Optimierung des Betriebs der Produktionsanlage.

Gemäß einer zweckmäßigen erfindungsgemäßen Variante werden bei der Ausführung des Verfahrens einer oder mehrere der folgenden Parameter ermittelt, überwacht, bestimmt oder dergleichen: Temperaturen, Durchflussmengen, Schieberstellungen, Stromaufnahme, Produktdaten, wie Material, Produktidentifikationsnummern, Drehmomente, Schwingungen, Verschmutzungen, Verschleißzustand, Einsatzhäufigkeit, oder dergleichen.

In einer vorteilhaften Variante der Erfindung ermittelt das erfindungsgemäße Verfahren auf Basis der bestimmten Wartungsmaßnahmen Hauptkostentreiber der Produktionsanlage. Derartige Hauptkostentreiber werden erfindungsgemäß auch als "bad actors" bezeichnet und bei der Bestimmung der Wartungsmaßnahmen besonders berücksichtigt.

Nach einer erfindungsgemäßen Variante erstellt das erfindungsgemäße Verfahren für die Hauptkostentreiber eine spezielle Instandhaltungsstrategie und/oder spezielle Überwachung.

Neben einer besonderen Berücksichtigung der bad actors bei den Wartungsmaßnahmen kann das erfindungsgemäße Verfahren durch die Bestimmung der bad actors auch dazu beitragen, dass diese durch andere Komponenten ausgetauscht werden, so dass derartige Hauptkostentreiber (bad actors) wegfallen und die Produktionsanlage betriebswirtschaftlicher operiert.

Gemäß einer bevorzugten Variante der Erfindung werden die Wartungsmaßnahmen durch einen Optimierer hinsichtlich einer betriebswirtschaftlichen Ausnutzung der Produktionsanlage optimiert. Der Optimierer bestimmt insbesondere den betriebswirtschaftlich sinnvollsten nächsten Wartungstermin. Der Optimierer übernimmt also die Auswertung der zur Verfügung stehenden Daten und bestimmt die betriebswirtschaftlich optimale Ausnutzung der Produktionsanlage.

Zweckmäßigerweise basiert der Optimierer auf Methoden des Operation Research, wie beispielsweise lineare Programme, konvexe Optimierung oder speziell gemischt-ganzzahlige Optimierung, oder des Bestärkenden Lernens, wie beispielsweise tiefe neuronale Netzwerke.

Die Aufgabe wird ferner gelöst durch ein Computerprogramm, umfassend Befehle, die bei der Ausführung des Programms durch einen Computer diesen veranlassen, das erfindungsgemäße Verfahren auszuführen.

Weiterhin wird die Aufgabe gelöst durch ein Computerprogramm, umfassend Befehle, die bewirken, dass die erfindungsgemäße Vorrichtung die Verfahrensschritte des erfindungsgemäßen Verfahrens ausführt.

Nachfolgend wird die Erfindung anhand der in den Figuren dargestellten Ausführungsbeispielen näher erläutert. Es zeigen:
- Fig. 1: eine schematische Ansicht eines Ausführungsbeispiels eines erfindungsgemäßen Wartungsplanungssystems für eine Produktionsanlage, und
- Fig. 2: eine schematische Ansicht eines Ausführungsbeispiels eines erfindungsgemäßen Verfahrens zur Bestimmung von Wartungsmaßnahmen für eine Produktionsanlage.

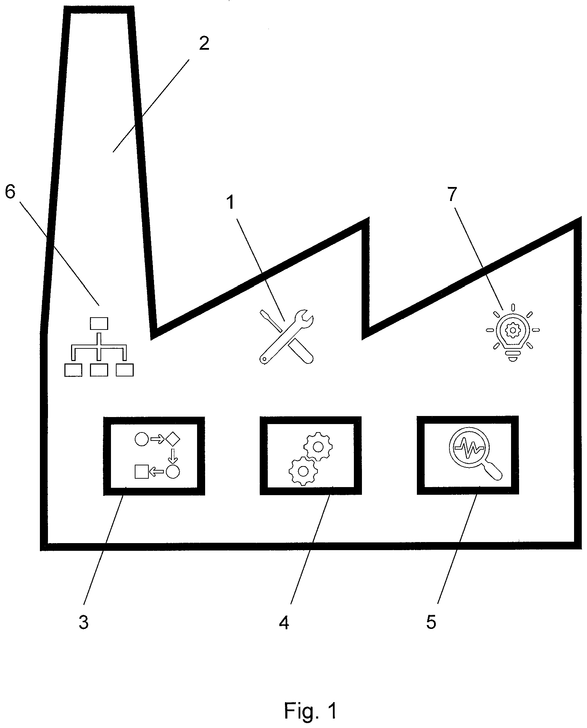

Fig. 1 zeigt eine schematische Ansicht einer Produktionsanlage 2, insbesondere eine Produktionsanlage 2 der metallerzeugenden Industrie, der nicht-Eisen- oder Stahlindustrie oder der Vorlegierungsherstellung. Die Produktionsanlage 2 umfasst ein erfindungsgemäßes Wartungsplanungssystem 1 zur Bestimmung von Wartungsmaßnahmen für die Produktionsanlage 2. Die von dem Wartungsplanungssystem 1 bestimmten Wartungsmaßnahmen umfassen beispielsweise eine Auflistung der durchzuführenden Wartungsmaßnahmen, Auflistung der für die durchzuführenden Wartungsmaßnahmen erforderlichen Gegenstände, Auflistung der an den Wartungsmaßnahmen beteiligten Personen und/oder Gerätschäften, einen Zeitplan für die durchzuführenden Wartungsmaßnahmen, Auflistung und/oder Ausführung von Bestellungen von Betriebsmitteln und Ersatzteilen, und dergleichen.

Die Produktionsanlage 2 aus Fig. 1 umfasst ein Produktionsplanungssystem 3 zur Bestimmung einer Produktionsreihenfolge für die Produktionsanlage 2. Das Produktionsplanungssystem 3 bestimmt dabei Steuerdaten für ein Automatisierungssystem 4, wobei das Automatisierungssystem 4 die Produktion in der Produktionsanlage 2 steuert. Dazu führt das Automatisierungssystem 4 beispielsweise die vom Produktionsplanungssystem 3 bestimmte Produktionsreihenfolge aus, insbesondere durch Ausführen der vom Produktionsplanungssystem 3 erstellten Steuerdaten.

Die vom Produktionsplanungssystem 3 bestimmte Produktionsreihenfolge umfasst Informationen darüber, welche Eingangsprodukte der Produktionsanlage 2 zugeführt werden und welche Ausgangsprodukte aus den Eingangsprodukten hergestellt werden, insbesondere in welcher zeitlichen Reihenfolge.

Die Produktionsanlage 2 umfasst ferner ein Zustandsüberwachungssystem 5 und ein Unternehmensplanungssystem 6.

Mittels des Zustandsüberwachungssystems 5 werden Zustände der Produktionsanlage 2 und deren Komponenten erfasst. Das Zustandsüberwachungssystem 5 kann eine Vorhersage von Zuständen der Produktionsanlage 2 und deren Komponenten bereitstellen, welche vom Wartungsplanungssystem 1 bei der Bestimmung der Wartungsmaßnahmen berücksichtigt wird.

Das Unternehmensplanungssystem 6 dient zur betriebswirtschaftlichen Verwaltung der Produktion und Wartung in der Produktionsanlage 2. Das Unternehmensplanungssystem 6 umfasst beispielsweise Vorgaben zu den zu produzierenden Produkten. Insbesondere stellt das Unternehmensplanungssystem 6 betriebswirtschaftliche Informationen bereit zu: Materialeinkauf, Ressourceneinkauf, Ersatzteilbeschaffung, Ersatzteilverwaltung, Lieferkosten, Lieferzeiten, Lagerkosten, Personalkosten, oder dergleichen.

Das Produktionsplanungssystem 3, das Automatisierungssystem 4, das Zustandsüberwachungssystem 5, das Unternehmensplanungssystem 6 und/oder das Qualitätsermittlungssystem 7 ermitteln, überwachen, bestimmen oder dergleichen einen oder mehrere der folgenden Parameter: Temperaturen, Durchflussmengen, Schieberstellungen, Stromaufnahme, Produktdaten, wie Material, Produktidentifikationsnummern, Drehmomente, Schwingungen, Verschmutzungen, Verschleißzustand, Einsatzhäufigkeit, oder dergleichen.

Erfindungsgemäß berücksichtigt das Wartungsplanungssystem 1 bei der Bestimmung der Wartungsmaßnahmen die Informationen des Produktionsplanungssystems 3, des Automatisierungssystems 4, des Zustandsüberwachungssystems 5 und des Unternehmensplanungssystems 6. Das Wartungsplanungssystem optimiert die Wartungsmaßnahmen in der Produktionsanlage 2 hinsichtlich einer betriebswirtschaftlichen Ausnutzung der Produktionsanlage 2.

Das Wartungsplanungssystem 1 berücksichtigt bei der Optimierung der betriebswirtschaftlichen Ausnutzung der Produktionsanlage 2 die Kosten für eine Wartungsmaßnahme und die durch die Wartungsmaßnahme erzielten Erträge. Insbesondere berücksichtigt das Wartungsplanungssystem 1 bei der Optimierung der betriebswirtschaftlichen Ausnutzung der Produktionsanlage 2 die Intensität der Wartungsarbeiten, den Einfluss der Wartungsarbeiten auf die Produktqualität und/oder die Prozessführung, den Personalaufwand, oder dergleichen.

Vorteilhafterweise optimiert das Wartungsplanungssystem 1 die Wartungsmaßnahmen kontinuierlich über die Laufzeit der Produktionsanlage 2.

Die Produktionsanlage 2 aus Fig. 1 umfasst weiterhin ein Qualitätsermittlungssystem 7 zur Erfassung von Produktqualitäten der in der Produktionsanlage 2 hergestellten Produkte. Das erfindungsgemäße Wartungsplanungssystem 1 berücksichtigt vorzugsweise die Informationen des Qualitätsermittlungssystems 7 bei der Bestimmung der Wartungsmaßnahmen.

Das Qualitätsermittlungssystem 7 kann eine Vorhersage von Produktqualitäten der in der Produktionsanlage 2 hergestellten Produkte bereitstellen, welche ebenfalls vom Wartungsplanungssystem 1 bei der Bestimmung der Wartungsmaßnahmen berücksichtigt werden kann.

Das Wartungsplanungssystem 1 kann ein digitales Modell 8 der Produktionsanlage 2 erstellen und mittels des digitalen Modells 8 die Wartungsmaßnahmen hinsichtlich einer betriebswirtschaftlichen Ausnutzung der Produktionsanlage 2 optimieren. Die Erstellung des digitalen Modells 8 und die Optimierung der betriebswirtschaftlichen Ausnutzung der Produktionsanlage 2 erfolgt insbesondere unter Berücksichtigung der Informationen des Produktionsplanungssystems 3, des Automatisierungssystems 4, des Zustandsüberwachungssystems 5 und des Unternehmensplanungssystems 6.

Das Wartungsplanungssystem 1 trainiert vorzugsweise das erstellte digitale Modell 8 kontinuierlich, insbesondere unter Berücksichtigung der Informationen des Produktionsplanungssystems 3, des Automatisierungssystems 4, des Zustandsüberwachungssystems 5 und des Unternehmensplanungssystems 6. Das digitale Modell 8 kann auf Methoden der künstlichen Intelligenz, insbesondere des maschinellen Lernens oder neuronaler Netze, Entscheidungsbäume, lineare oder nichtlineare Regressionsmodelle, Support-Vector-Machines und/oder der Big Data Analyse basieren.

Das Wartungsplanungssystem 1 übermittelt beispielsweise die bestimmten Wartungsmaßnahmen vor Durchführung der Wartungsmaßnahmen zumindest teilweise an die anderen Systeme der Produktionsanlage 2, insbesondere an das Produktionsplanungssystem 3, das Automatisierungssystem 4, das Zustandsüberwachungssystem 5, das Unternehmensplanungssystem 6 und/oder das Qualitätsermittlungssystem 7.

Das Wartungsplanungssystem 1 kann einen anfänglichen Wartungsplan mit Wartungsmaßnahmen erstellen oder dem Wartungsplanungssystem 1 wird ein anfänglicher Wartungsplan mit Wartungsmaßnahmen zur Verfügung gestellt. Der anfängliche Wartungsplan beruht beispielsweise auf historischen Daten der Produktionsanlage 2 und/oder auf Daten von vergleichbaren Produktionsanlagen 2.

Ferner weist das Wartungsplanungssystem 1 vorzugsweise eine Benutzerschnittstelle 9 auf, zum Eingeben von Daten eines Benutzers, insbesondere des Wartungspersonals zu durchgeführten Wartungsarbeiten, beobachteten Zuständen oder Defekten der Produktionsanlage 2, oder dergleichen

Vorteilhafterweise ermittelt das Wartungsplanungssystem 1 auf Basis der bestimmten Wartungsmaßnahmen Hauptkostentreiber der Produktionsanlage 2. Für die ermittelten Hauptkostentreiber kann das Wartungsplanungssystem 1 eine spezielle Instandhaltungsstrategie und/oder spezielle Überwachung erstellen oder den Austausch veranlassen.

Zweckmäßigerweise umfasst das Wartungsplanungssystem 1 einen Optimierer 10, welcher die Wartungsmaßnahmen hinsichtlich einer betriebswirtschaftlichen Ausnutzung der Produktionsanlage 2 optimiert, insbesondere den betriebswirtschaftlich sinnvollsten nächsten Wartungstermin bestimmt. Der Optimierer 10 basiert insbesondere auf Methoden des Operation Research, wie beispielsweise lineare Programme, konvexe Optimierung oder speziell gemischt-ganzzahlige Optimierung, oder des Bestärkenden Lernens, wie beispielsweise tiefe neuronale Netzwerke.

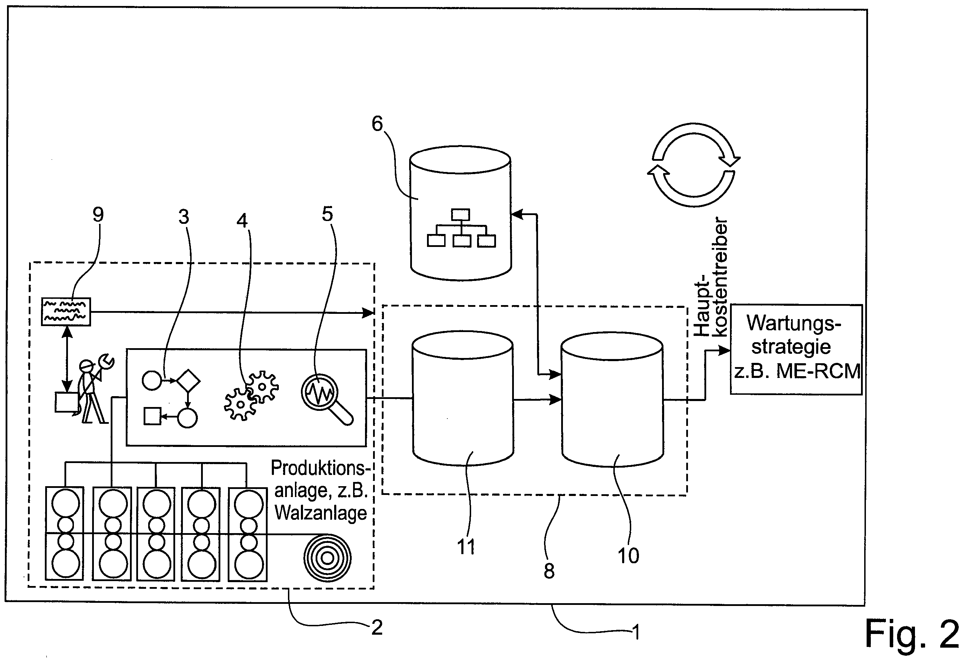

Fig. 2 zeigt eine schematische Ansicht eines Ausführungsbeispiels eines erfindungsgemäßen Verfahrens zur Bestimmung von Wartungsmaßnahmen für eine Produktionsanlage 2.

Das erfindungsgemäße Verfahren wird beispielsweise von einem Wartungsplanungssystem 1 ausgeführt, insbesondere einem erfindungsgemäßen Wartungsplanungssystem 1. Das Wartungsplanungssystem 1 kann integral mit der Produktionsanlage 2 ausgebildet sein oder als separate Komponente, die auch außerhalb der Produktionsanlage 2 angeordnet sein kann.

Das Verfahren dient zur Bestimmung von Wartungsplanungsmaßnahmen für eine Produktionsanlage 2, insbesondere einer Produktionsanlage 2 der metallerzeugenden Industrie, der nicht-Eisen- oder Stahlindustrie oder der Vorlegierungsherstellung.

In einem ersten Schritt wird eine Produktreihenfolge für die Produktionsanlage 2 bestimmt. Dies erfolgt beispielsweise durch ein Produktionsplanungssystem 3 der Produktionsanlage 2. Die Produktionsreihenfolge umfasst beispielsweise Steuerdaten für ein Automatisierungssystem 4 der Produktionsanlage 2.

Die bestimmte Produktionsreihenfolge umfasst insbesondere Informationen darüber, welche Eingangsprodukte der Produktionsanlage 2 zugeführt werden und welche Ausgangsprodukte aus den Eingangsprodukten hergestellt werden, insbesondere in welcher zeitlichen Reihenfolge.

Die Produktion in der Produktionsanlage 2 wird durch Ausführen der bestimmten Produktionsreihenfolge gesteuert. Dies erfolgt insbesondere durch Ausführen der Steuerdaten durch das Automatisierungssystem 4.

Während der Produktion werden Zustände der Produktionsanlage 2 und deren Komponenten erfasst. Dies erfolgt beispielsweise durch ein Zustandsüberwachungssystem 5 der Produktionsanlage 2. Bei der Ausführung des Verfahrens werden insbesondere einer oder mehrere der folgenden Parameter ermittelt, überwacht, bestimmt oder dergleichen: Temperaturen, Durchflussmengen, Schieberstellungen, Stromaufnahme, Produktdaten, wie Material, Produktidentifikationsnummern, Drehmomente, Schwingungen, Verschmutzungen, Verschleißzustand, Einsatzhäufigkeit, oder dergleichen.

Das Automatisierungssystem 4 und das Zustandsüberwachungssystem 5 sind integrale Bestandteile der Produktionsanlage 2. Das Produktionsplanungssystem 3 ist gemäß dem Ausführungsbeispiel aus Fig. 2 ebenfalls Bestandteil der Produktionsanlage 2, kann jedoch theoretisch auch außerhalb der Produktionsanlage 2 angeordnet sein.

Zur Bestimmung der Wartungsmaßnahmen für die Produktionsanlage 2 werden zusätzlich betriebswirtschaftliche Informationen zu der Produktion und Wartung der Produktionsanlage 2 erfasst. Die betriebswirtschaftlichen Informationen sind beispielsweise in einem Unternehmensplanungssystem 6 hinterlegt, welches zur betriebswirtschaftlichen Verwaltung der Produktion und Wartung in der Produktionsanlage 2 ausgebildet ist. Das Unternehmensplanungssystem 6 kann integral mit der Produktionsanlage 2 ausgebildet sein oder als externe Komponente, wie in dem Ausführungsbeispiel gemäß Fig. 2.

Auf Basis der bestimmten Produktionsreihenfolge, der Steuerung der Produktion, der erfassten Zustände und der betriebswirtschaftlichen Informationen werden die Wartungsmaßnahmen bestimmt und hinsichtlich einer betriebswirtschaftlichen Ausnutzung der Produktionsanlage 2 optimiert. Die bestimmten Wartungsmaßnahmen für die Produktionsanlage 2 umfassen insbesondere eine Auflistung der durchzuführenden Wartungsmaßnahmen, Auflistung der für die durchzuführenden Wartungsmaßnahmen erforderlichen Gegenstände, Auflistung der an den Wartungsmaßnahmen beteiligten Personen und/oder Gerätschäften, einen Zeitplan für die durchzuführenden Wartungsmaßnahmen, Auflistung und/oder Ausführung von Bestellungen von Betriebsmitteln und Ersatzteilen, und dergleichen.

Die erfassten betriebswirtschaftlichen Informationen umfassen beispielsweise eine oder mehrere der folgenden Informationen: Materialeinkauf, Ressourceneinkauf, Ersatzteilbeschaffung, Ersatzteilverwaltung, Lieferkosten, Lieferzeiten, Lagerkosten, Personalkosten, oder dergleichen.

Bei der Optimierung der betriebswirtschaftlichen Ausnutzung der Produktionsanlage 2 werden beispielsweise die Kosten für eine Wartungsmaßnahme und die durch die Wartungsmaßnahme erzielten Erträge berücksichtigt. Ferner können bei der Optimierung der betriebswirtschaftlichen Ausnutzung der Produktionsanlage 2 die Intensität der Wartungsarbeiten, den Einfluss der Wartungsarbeiten auf die Produktqualität und/oder die Prozessführung, den Personalaufwand, oder dergleichen berücksichtigt werden. Die bestimmten Wartungsmaßnahmen werden vor Durchführung der Wartungsmaßnahmen zumindest teilweise an die Produktionsanlage 2 übermittelt, insbesondere an das Produktionsplanungssystem 3, das Automatisierungssystem 4, das Zustandsüberwachungssystem 5, das Unternehmensplanungssystem 6 und/oder ein Qualitätsermittlungssystem 7 der Produktionsanlage 2.

Das erfindungsgemäße Verfahren kann auch den Schritt des Ermittelns einer Vorhersage von Zuständen der Produktionsanlage 2 und deren Komponenten umfassen. Die Vorhersage der Zustände der Produktionsanlage 2 und deren Komponenten wird vorzugsweise bei der Bestimmung der Wartungsmaßnahmen berücksichtigt.

Vorteilhafterweise umfasst das erfindungsgemäße Verfahren den Schritt des Ermittelns einer Vorhersage von Produktqualitäten der in der Produktionsanlage 2 hergestellten Produkte, welche vorzugsweise bei der Bestimmung der Wartungsmaßnahmen berücksichtigt wird. Dies erfolgt beispielsweise mittels eines Qualitätsermittlungssystems 7. Die Qualitätsermittlung kann innerhalb der Produktionsanlage 2 durchgeführt werden oder ist dieser nachgelagert.

Ferner kann das erfindungsgemäße Verfahren den Schritt des Ermittelns einer Vorhersage von Produktqualitäten der in der Produktionsanlage 2 hergestellten Produkte umfassen, wobei die ermittelte Vorhersage vorzugsweise bei der Bestimmung der Wartungsmaßnahmen berücksichtigt wird.

Vorzugsweise werden die Wartungsmaßnahmen über die Laufzeit der Produktionsanlage 2 kontinuierlich optimiert.

Das Ausführungsbeispiel gemäß Fig. 2 umfasst den Schritt des Erstellens eines digitalen Modells 8 der Produktionsanlage 2. Mittels des digitalen Modells 8 werden die Wartungsmaßnahmen hinsichtlich einer betriebswirtschaftlichen Ausnutzung der Produktionsanlage 2 optimiert, insbesondere unter Berücksichtigung der bestimmten Produktionsreihenfolge, der Steuerung der Produktion, der erfassten Zustände und der erfassten betriebswirtschaftlichen Informationen.

Vorzugsweise wird das digitale Modell 8 kontinuierlich trainiert. Das Training erfolgt unter Berücksichtigung der bestimmten Produktionsreihenfolge, der Steuerung der Produktion, der erfassten Zustände und der erfassten betriebswirtschaftlichen Informationen.

Das digitale Modell 8 basiert beispielsweise auf Methoden der künstlichen Intelligenz, insbesondere des maschinellen Lernens oder neuronaler Netze, Entscheidungsbäume, lineare oder nichtlineare Regressionsmodelle, Support-Vector-Machines und/oder der Big Data Analyse.

Das digitale Modell gemäß Fig. 2 umfasst einen Datenspeicher 11 für die bestimmte Produktionsreihenfolge, die Steuerung der Produktion und die erfassten Zustände. Die betriebswirtschaftlichen Informationen werden dem digitalen Modell 8 direkt vom Unternehmensplanungssystem 6 zur Verfügung gestellt.

Zur Bestimmung der Wartungsmaßnahmen umfasst das digitale Modell 8 einen Optimierer 10, welcher die Wartungsmaßnahmen hinsichtlich einer betriebswirtschaftlichen Ausnutzung der Produktionsanlage 2 optimiert, insbesondere den betriebswirtschaftlich sinnvollsten nächsten Wartungstermin bestimmt. Der Optimierer 10 basiert insbesondere auf Methoden des Operation Research, wie beispielsweise lineare Programme, konvexe Optimierung oder speziell gemischt-ganzzahlige Optimierung, oder des Bestärkendem Lernens, wie beispielsweise tiefe neuronale Netzwerke.

Zur Initialisierung kann ein anfänglicher Wartungsplan mit Wartungsmaßnahmen erstellt oder dem Verfahren zur Verfügung gestellt werden, wobei der anfängliche Wartungsplan auf historischen Daten der Produktionsanlage 2 beruht und/oder auf Daten von vergleichbaren Produktionsanlagen 2.

Das erfindungsgemäße Verfahren umfasst vorzugsweise den Schritt einer manuellen Dateneingabe eines Benutzers 12, insbesondere des Wartungspersonals zu durchgeführten Wartungsarbeiten, beobachteten Zuständen oder Defekten der Produktionsanlage 2, oder dergleichen. Die Dateneingabe erfolgt beispielsweise über eine Benutzerschnittstelle 9. Die Benutzerschnittstelle 9 kann auf einem Computer, einem Tablet, Smartphone oder dergleichen bereitgestellt werden.

Mittels des erfindungsgemäßen Verfahrens können auf Basis der bestimmten Wartungsmaßnahmen die Hauptkostentreiber der Produktionsanlage 2 ermittelt werden. Für die ermittelten Hauptkostentreiber können spezielle Instandhaltungsmaßnahmen oder spezielle Überwachungen erstellt werden. Alternativ können die Hauptkostentreiber gegebenenfalls durch andere Komponenten ausgetauscht werden.

### Bezugszeichenliste

- 1: Wartungsplanungssystem
- 2: Produktionsanlage
- 3: Produktionsplanungssystem
- 4: Automatisierungssystem
- 5: Zustandsüberwachungssystem
- 6: Unternehmensplanungssystem
- 7: Qualitätsermittlungssystem
- 8: digitales Modell
- 9: Benutzerschnittstelle
- 10: Optimierer
- 11: Datenspeicher
- 12: Benutzer

## Patentansprüche

1. Produktionsanlage (2) der metallerzeugenden Industrie, der nicht-Eisen- oder Stahlindustrie oder der Vorlegierungsherstellung, wobei die Produktionsanlage (2) umfasst:
ein Produktionsplanungssystem (3) zur Bestimmung einer Produktionsreihenfolge für die Produktionsanlage (2) und von Steuerdaten für ein Automatisierungssystem (4),
das Automatisierungssystem (4) zur Steuerung der Produktion in der Produktionsanlage (2), wobei das Automatisierungssystem (4) die vom Produktionsplanungssystem (3) bestimmte Produktionsreihenfolge ausführt, ein Zustandsüberwachungssystem (5) zur Erfassung von Zuständen der Produktionsanlage (2) und deren Komponenten, wobei das Zustandsüberwachungssystem (5) eine Vorhersage von Zuständen der Produktionsanlage (2) und deren Komponenten bereitstellt und
ein Unternehmensplanungssystem (6) zur betriebswirtschaftlichen Verwaltung der Produktion und Wartung in der Produktionsanlage (2), wobei das Unternehmensplanungssystem (6) betriebswirtschaftliche Informationen bereitstellt zu: Materialeinkauf, Ressourceneinkauf, Ersatzteilbeschaffung, Ersatzteilverwaltung, Lieferkosten, Lieferzeiten, Lagerkosten, Personalkosten, oder dergleichen,
ein Wartungsplanungssystem (1), wobei das Wartungsplanungssystem (1) zur Bestimmung von Wartungsmaßnahmen für die Produktionsanlage (2) ausgebildet ist, umfassend eine Auflistung der durchzuführenden Wartungsmaßnahmen, Auflistung der für die durchzuführenden Wartungsmaßnahmen erforderlichen Gegenstände, Auflistung der an den Wartungsmaßnahmen beteiligten Personen und/oder Gerätschäften, einen Zeitplan für die durchzuführenden Wartungsmaßnahmen, Auflistung und/oder Ausführung von Bestellungen von Betriebsmitteln und Ersatzteilen, und dergleichen,
**dadurch gekennzeichnet, dass**
das Wartungsplanungssystem (1) ein digitales Modell (8) der Produktionsanlage (2) erstellt, wobei das digitale Modell (8) als digitaler Zwilling der Produktionsanlage (2) ausgebildet ist und die Informationen des Produktionsplanungssystems (3), des Automatisierungssystems (4), des Zustandsüberwachungssystems (5) und des Unternehmensplanungssystems (6) umfasst,
wobei das Wartungsplanungssystem (1) mittels des digitalen Modells (8) die Wartungsmaßnahmen hinsichtlich einer betriebswirtschaftlichen Ausnutzung der Produktionsanlage (2) optimiert, um die wirtschaftliche Gesamtbilanz der Produktionsanlage (2) im Bereich der Instandhaltung dynamisch an die aktuelle und in naher Zukunft liegende Belastungssituation anzupassen,
wobei das digitale Modell (8) bei der Bestimmung der Wartungsmaßnahmen die folgenden Informationen miteinander verknüpft:
die bestimmte Produktionsreihenfolge für die Produktionsanlage (2) des Produktionsplanungssystems (3),
die Steuerdaten des Automatisierungssystems (4),
die erfassten Zustände der Produktionsanlage (2) und deren Komponenten und der Vorhersage von Zuständen der Produktionsanlage (2) und deren Komponenten des Zustandsüberwachungssystems (5) und
die betriebswirtschaftlichen Informationen des Unternehmensplanungssystems (6).

2. Produktionsanlage nach Anspruch 1, wobei die Produktionsanlage (2) weiterhin ein Qualitätsermittlungssystem (7) zur Erfassung von Produktqualitäten der in der Produktionsanlage (2) hergestellten Produkte umfasst, wobei das Wartungsplanungssystem (1) vorzugsweise die Informationen des Qualitätsermittlungssystems (7) bei der Bestimmung der Wartungsmaßnahmen berücksichtigt.

3. Produktionsanlage nach einem der Ansprüche 1 bis 2, wobei das Wartungsplanungssystem (1) bei der Optimierung der betriebswirtschaftlichen Ausnutzung der Produktionsanlage (2) die Kosten für eine Wartungsmaßnahme und die durch die Wartungsmaßnahme erzielten Erträge berücksichtigt.

4. Produktionsanlage nach einem der Ansprüche 1 bis 3, wobei das Wartungsplanungssystem (1) bei der Optimierung der betriebswirtschaftlichen Ausnutzung der Produktionsanlage (2) die Intensität der Wartungsarbeiten, den Einfluss der Wartungsarbeiten auf die Produktqualität und/oder die Prozessführung, den Personalaufwand, oder dergleichen berücksichtigt.

5. Produktionsanlage nach einem der Ansprüche 1 bis 4, wobei das Wartungsplanungssystem (1) die bestimmten Wartungsmaßnahmen vor Durchführung der Wartungsmaßnahmen zumindest teilweise an die anderen Systeme der Produktionsanlage (2) übermittelt, insbesondere an das Produktionsplanungssystem (3), das Automatisierungssystem (4), das Zustandsüberwachungssystem (5), das Unternehmensplanungssystem (6) und/oder das Qualitätsermittlungssystem (7).

6. Produktionsanlage nach einem der Ansprüche 1 bis 5, wobei das Wartungsplanungssystem (1) eine Benutzerschnittstelle (9) aufweist, zum Eingeben von Daten eines Benutzers (12), insbesondere des Wartungspersonals zu durchgeführten Wartungsarbeiten, beobachteten Zuständen oder Defekten der Produktionsanlage (2), oder dergleichen.

7. Produktionsanlage nach einem der Ansprüche 1 bis 6, wobei das Wartungsplanungssystem (1) auf Basis der bestimmten Wartungsmaßnahmen Hauptkostentreiber der Produktionsanlage (2) ermittelt.

8. Produktionsanlage nach einem der Ansprüche 1 bis 7, wobei das Wartungsplanungssystem (1) einen Optimierer (10) umfasst, welcher die Wartungsmaßnahmen hinsichtlich einer betriebswirtschaftlichen Ausnutzung der Produktionsanlage (2) optimiert, insbesondere den betriebswirtschaftlich sinnvollsten nächsten Wartungstermin bestimmt.

9. Verfahren zur Bestimmung von Wartungsmaßnahmen für eine Produktionsanlage (2) der metallerzeugenden Industrie, der nicht-Eisen- oder Stahlindustrie oder der Vorlegierungsherstellung, umfassend die Schritte:
Bestimmen einer Produktionsreihenfolge für die Produktionsanlage (2) und von Steuerdaten für ein Automatisierungssystem (4) mittels eines Produktionsplanungssystems (3) der Produktionsanlage (2),
Steuern der Produktion in der Produktionsanlage (2) durch Ausführen der bestimmten Produktionsreihenfolge durch das Automatisierungssystem (4),
Erfassen von Zuständen der Produktionsanlage (2) und deren Komponenten mittels eines Zustandsüberwachungssystems (5) der Produktionsanlage (2),
Ermitteln einer Vorhersage von Zuständen der Produktionsanlage (2) und deren Komponenten mittels eines Zustandsüberwachungssystems (5) der Produktionsanlage (2),
Erfassen von betriebswirtschaftlichen Informationen zu der Produktion und Wartung in der Produktionsanlage (2) mittels eines Unternehmensplanungssystems (6) der Produktionsanlage (2), wobei die erfassten betriebswirtschaftlichen Informationen eine oder mehrere der folgenden Informationen umfassen: Materialeinkauf, Ressourceneinkauf, Ersatzteilbeschaffung, Ersatzteilverwaltung, Lieferkosten, Lieferzeiten, Lagerkosten, Personalkosten, oder dergleichen,
Bestimmen von Wartungsmaßnahmen für die Produktionsanlage (2) mittels eines Wartungsplanungssystems (1), umfassend eine Auflistung der durchzuführenden Wartungsmaßnahmen, Auflistung der für die durchzuführenden Wartungsmaßnahmen erforderlichen Gegenstände, Auflistung der an den Wartungsmaßnahmen beteiligten Personen und/oder Gerätschäften, einen Zeitplan für die durchzuführenden Wartungsmaßnahmen, Auflistung und/oder Ausführung von Bestellungen von Betriebsmitteln und Ersatzteilen, und dergleichen,
**dadurch gekennzeichnet, dass**
das Wartungsplanungssystem (1) ein digitales Modell (8) der Produktionsanlage (2) erstellt, wobei das digitale Modell (8) als digitaler Zwilling der Produktionsanlage (2) ausgebildet ist und die Informationen des Produktionsplanungssystems (3), des Automatisierungssystems (4), des Zustandsüberwachungssystems (5) und des Unternehmensplanungssystems (6) umfasst,
wobei mittels des digitalen Modells (8) die Wartungsmaßnahmen hinsichtlich einer betriebswirtschaftlichen Ausnutzung der Produktionsanlage (2) optimiert werden, um die wirtschaftliche Gesamtbilanz der Produktionsanlage (2) im Bereich der Instandhaltung dynamisch an die aktuelle und in naher Zukunft liegende Belastungssituation anzupassen,
wobei bei der Bestimmung der Wartungsmaßnahmen die bestimmte Produktionsreihenfolge, die Steuerung der Produktion, die erfassten Zustände, die vorhergesagten Zustände und die erfassten betriebswirtschaftlichen Informationen miteinander verknüpft werden.

10. Verfahren nach Anspruch 9,
weiterhin umfassend den Schritt des Ermittelns von Produktqualitäten der in der Produktionsanlage (2) hergestellten Produkte, welche vorzugsweise bei der Bestimmung der Wartungsmaßnahmen berücksichtigt werden.

11. Verfahren nach einem der Ansprüche 9 bis 10,
wobei die Wartungsmaßnahmen über die Laufzeit der Produktionsanlage (2) kontinuierlich optimiert werden.

12. Verfahren nach einem der Ansprüche 9 bis 11,
wobei ein anfänglicher Wartungsplan mit Wartungsmaßnahmen erstellt oder zur Verfügung gestellt wird, wobei der anfängliche Wartungsplan auf historischen Daten der Produktionsanlage (2) beruht und/oder auf Daten von vergleichbaren Produktionsanlagen (2).

13. Verfahren nach einem der Ansprüche 9 bis 12,
umfassend den Schritt einer manuellen Dateneingabe eines Benutzers (12), insbesondere des Wartungspersonals zu durchgeführten Wartungsarbeiten, beobachteten Zuständen oder Defekten der Produktionsanlage (2), oder dergleichen.

14. Verfahren nach einem der Ansprüche 9 bis 13,
umfassend den Schritt des Ermittelns von Hauptkostentreibern der Produktionsanlage (2) auf Basis der bestimmten Wartungsmaßnahmen.

15. Computerprogramm, umfassend Befehle, die bei der Ausführung des Programms durch einen Computer diesen veranlassen, das Verfahren nach einem der Ansprüche 9 bis 14 auszuführen.

## Claims

1. Production plant (2) of the metal-producing industry, the non-ferrous industry or steel industry or master alloy production, wherein the production plant (2) comprises:
a production planning system (3) for determining a production sequence for the production plant (2) and control data for an automation system (4),
the automation system (4) for control of the production in the production plant (2), wherein the automation system (4) executes the production sequence determined by the production planning system (3),
a status monitoring system (5) for detecting states of the production plant (2) and the components thereof, wherein the status monitoring system (5) provides a prediction of states of the production plant (2) and the components thereof, and
a business planning system (6) for economic management of production and maintenance in the production plant (2), wherein the business planning system (6) provides economic data with respect to purchase of material, purchase of resources, procurement of replacement parts, management of replacement parts, shipping costs, shipping times, storage costs, personnel costs or the like,
a maintenance planning system (1), wherein the maintenance planning system (1) is configured for determination of maintenance measures for the production plant (2), comprising a listing of maintenance measures to be carried out, listing of the articles required for the maintenance measures to be carried out, listing of the persons and/or equipment participating in the maintenance measures, a time plan for maintenance measures to be carried out, listing and/or execution of orders of resources and replacement parts, and the like,
**characterised in that**
the maintenance planning system (1) creates a digital model (8) of the production plant (2), wherein the digital model (8) is configured as a digital twin of the production plant (2) and comprises the data of the production planning system (3), the automation system (4), the status monitoring system (5) and the business planning system (6),
wherein the maintenance planning system (1) by means of the digital model (8) optimises the maintenance measures with respect to economic utilisation of the production plant (2) so as to dynamically adapt the economic overall balance of the production plant (2) in the sphere of keeping in service to the load situation which is current and lies in the near future,
wherein the digital model (8) in determination of the maintenance measures links together the following data:
the determined production sequence for the production plant (2) of the production planning system (3),
the control data of the automation system (4),
the detected states of the production plant (2) and the components thereof and the prediction of states of the production plant (2) and the components thereof of the status monitoring system (5), and
the economic data of the business planning system (6).

2. Production plant according to claim 1, wherein the production plant (2) further comprises a quality determining system (7) for detection of production qualities of the products produced in the production plant (2), wherein the maintenance planning system (1) preferably takes into consideration the data of the quality determining system (7) in the determination of the maintenance measures.

3. Production plant according to one of claims 1 and 2, wherein the maintenance planning system (1) in the optimisation of the economic utilisation of the production plant (2) takes into consideration the costs for a maintenance measure and the gains achieved by the maintenance measure.

4. Production plant according to any one of claims 1 to 3, wherein the maintenance planning system (1) in the optimisation of the economic utilisation of the production plant (2) takes into consideration the intensity of the maintenance work, the influence of the maintenance work on the production quality and/or the conduct of the process, the outlay on personnel, or the like.

5. Production plant according to any one of claims 1 to 4, wherein the maintenance planning system (1) communicates the determined maintenance measures at least in part to the other systems of the production plant (2) before performance of the maintenance measures, particularly to the production planning system (3), the automation system (4), the status monitoring system (5), the business planning system (6) and/or the quality determining system (7).

6. Production plant according to any one of claims 1 to 5, wherein the maintenance planning system (1) comprises a user interface (9) for input of data of a user (12), particularly of the maintenance personnel with respect to maintenance work carried out, observed states or defects of the production plant (2), or the like.

7. Production plant according to any one of claims 1 to 6, wherein the maintenance planning system (1) determines principal cost drivers of the production plant (2) on the basis of the determined maintenance measures.

8. Production plant according to any one of claims 1 to 7, wherein the maintenance planning system (1) comprises an optimiser (10) which optimises the maintenance measures with respect to economic utilisation of the production plant (2), particularly the most economically sensible next maintenance term.

9. Method for determining maintenance measures for a production plant (2) of the metal-producing industry, non-ferrous or steel industry or master alloy production, comprising the steps:
determining a production sequence for the production plant (2) and control data for an automation system (4) by means of a production planning system (3) of the production plant (2)
controlling the production in the production plant (2) by execution of the determined production sequence by the automation system (4),
detecting states of the production plant (2) and the components thereof by means of a status monitoring system (5) of the production plant (2),
determining a prediction of states of the production plant (2) and the components thereof by means of a status monitoring system (5) of the production plant (2),
detecting economic data with respect to production and maintenance in the production plant (2) by means of a business planning system (6) of the production plant (2), wherein the detected economic data comprise one or more of the following data: purchase of material, purchase of resources, procurement of replacement parts, management of replacement parts, shipping costs, shipping times, storage costs, personnel costs or the like,
determining maintenance measures for the production plant (2) by means of a maintenance planning system (1), comprising a listing of maintenance measures to be carried out, listing of the articles required for the maintenance measures to be carried out, listing of the persons and/or equipment participating in the maintenance measures, a time plan for the maintenance measures to be carried out, listing and/or execution of orders of equipment and replacement parts, and the like,
**characterised in that**
the maintenance planning system (1) creates a digital model (8) of the production plant (2), wherein the digital model (8) is configured as a digital twin of the production plant (2) and comprises the data of the production planning system (3), the automation system (4), the status monitoring system (5) and the business planning system (6),
wherein by means of the digital model (8) the maintenance measures are optimised with respect to economic utilisation of the production plant (2) so as to dynamically adapt the economic overall balance of the production plant (2) in the sphere of keeping in service to the load situation which is current and lies in the near future,
wherein in determination of the maintenance measures the determined production sequence, the control of production, the detected states, the predicted states and the detected economic data are linked with one another.

10. Method according to claim 9, further comprising the step of determining production qualities of the products produced in the production plant (2), which are preferably taken into consideration in the determination of the maintenance measures.

11. Method according to one of claims 9 and 10, wherein the maintenance measures are continuously optimised over the running time of the production plant (2).

12. Method according to any one of claims 9 to 11, wherein an initial maintenance plan with maintenance measures is created or made available, wherein the initial maintenance plan is based on historical data of the production plant (2) and/or data of comparable production plants (2).

13. Method according to any one of claims 9 to 12, comprising a step of manual data input of a user (12), particularly of maintenance personnel, with respect to maintenance operations carried out, observed states or defects of the production plant (2), or the like.

14. Method according to any one of claims 9 to 13, comprising the step of determining principal cost drivers of the production plant (2) on the basis of the determined maintenance measures.

15. Computer program, comprising commands which on execution of the program by a computer causes this to execute the method according to any one of claims 9 to 14.

## Revendications

1. Installation de production (2) de l'industrie métallurgique, de l'industrie non ferreuse ou sidérurgique ou de la production d'alliages mères, l'installation de production (2) comprenant :
un système de planification de la production (3) pour déterminer une séquence de production pour l'installation de production (2) et des données de commande pour un système d'automatisation (4),
le système d'automatisation (4) pour contrôler la production dans l'installation de production (2), dans lequel le système d'automatisation (4) exécute la séquence de production déterminée par le système de planification de la production (3),
un système de surveillance de l'état (5) pour détecter les états de l'installation de production (2) et de ses composants, dans lequel le système de surveillance de l'état (5) fournit une prédiction des états de l'installation de production (2) et de ses composants et
un système de planification de l'activité (6) pour la gestion économique de la production et de la maintenance dans l'installation de production (2), le système de planification de l'activité (6) fournissant des informations de gestion concernant : l'achat de matériaux, l'achat de ressources, l'achat de pièces de rechange, la gestion des pièces de rechange, les coûts de livraison, les délais de livraison, les coûts de stockage, les coûts de personnel, ou similaires,
un système de planification de la maintenance (1), le système de planification de la maintenance (1) étant conçu pour déterminer des mesures de maintenance pour l'installation de production (2), comprenant une liste des mesures de maintenance à effectuer, une liste des objets nécessaires pour les mesures de maintenance à effectuer, une liste des personnes et/ou des équipements impliqués dans les mesures de maintenance, un calendrier des mesures de maintenance à effectuer, l'énumération et/ou l'exécution de commandes de moyens de production et de pièces de rechange, et similaires,
**caractérisé en ce que**
le système de planification de la maintenance (1) établit un modèle numérique (8) de l'installation de production (2), le modèle numérique (8) étant conçu comme un jumeau numérique de l'installation de production (2) et comprenant les informations du système de planification de la production (3), du système d'automatisation (4), du système de surveillance de l'état (5) et du système de planification de l'activité (6),
dans lequel le système de planification de la maintenance (1) optimise les mesures de maintenance, à l'aide du modèle numérique (8), en ce qui concerne une exploitation économique de l'installation de production (2), afin d'adapter de manière dynamique le bilan économique global de l'installation de production (2) dans le domaine de la maintenance à la situation de charge actuelle et à celle qui se présentera dans un avenir proche,
le modèle numérique (8) combinant, lors de la détermination des mesures de maintenance, les informations suivantes:
la séquence de production déterminée pour l'installation de production (2) du système de planification de la production (3), les données de commande du système d'automatisation (4), les états détectés de l'installation de production (2) et de ses composants et la prédiction des états de l'installation de production (2) et de ses composants du système de surveillance de l'état (5) et les informations de gestion du système de planification de l'activité (6).

2. Installation de production selon la revendication 1, dans laquelle l'installation de production (2) comprend en outre un système de détermination de la qualité (7) pour détecter les qualités des produits fabriqués dans l'installation de production (2), dans laquelle le système de planification de la maintenance (1) prend de préférence en compte les informations provenant du système de détermination de la qualité (7) lors de la détermination des mesures de maintenance.

3. Installation de production selon l'une quelconque des revendications 1 à 2, dans laquelle le système de planification de la maintenance (1) prend en compte, lors de l'optimisation de l'exploitation économique de l'installation de production (2), les coûts d'une mesure de maintenance et les revenus générés par la mesure de maintenance.

4. Installation de production selon l'une quelconque des revendications 1 à 3, dans laquelle le système de planification de la maintenance (1) prend en compte, lors de l'optimisation de l'exploitation économique de l'installation de production (2), l'intensité des travaux de maintenance, l'influence des travaux de maintenance sur la qualité du produit et/ou la gestion des processus, les frais de personnel, ou similaires.

5. Installation de production selon l'une quelconque des revendications 1 à 4, dans laquelle le système de planification de la maintenance (1) transmet les mesures de maintenance déterminées au moins partiellement aux autres systèmes de l'installation de production (2), notamment au système de planification de la production (3), au système d'automatisation (4), au système de surveillance de l'état (5), au système de planification de l'activité (6) et/ou au système de détermination de la qualité (7), avant l'exécution des mesures de maintenance.

6. Installation de production selon l'une quelconque des revendications 1 à 5, dans laquelle le système de planification de la maintenance (1) comprend une interface utilisateur (9) permettant de saisir des données d'un utilisateur (12), en particulier du personnel de maintenance, sur les travaux de maintenance effectués, les états observés ou les défauts de l'installation de production (2), ou similaires.

7. Installation de production selon l'une quelconque des revendications 1 à 6, dans laquelle le système de planification de la maintenance (1) détermine les principaux inducteurs de coûts de l'installation de production (2) sur la base des mesures de maintenance déterminées.

8. Installation de production selon l'une quelconque des revendications 1 à 7, dans laquelle le système de planification de la maintenance (1) comprend un optimiseur (10) qui optimise les mesures de maintenance en vue d'une exploitation économique de l'installation de production (2), en particulier qui détermine la prochaine date de maintenance la plus judicieuse du point de vue économique.

9. Procédé pour déterminer des mesures de maintenance pour une installation de production (2) de l'industrie métallurgique, de l'industrie non ferreuse ou sidérurgique ou de la production d'alliages mères, comprenant les étapes consistant à :
déterminer une séquence de production pour l'installation de production (2) et des données de commande pour un système d'automatisation (4) au moyen d'un système de planification de la production (3) de l'installation de production (2),
contrôler la production dans l'installation de production (2) en exécutant la séquence de production déterminée par le système d'automatisation (4),
détecter les états de l'installation de production (2) et de ses composants au moyen d'un système de surveillance de l'état (5) de l'installation de production (2),
déterminer une prédiction des états de l'installation de production (2) et de ses composants au moyen d'un système de surveillance de l'état (5) de l'installation de production (2),
acquérir des informations de gestion concernant la production et la maintenance dans l'installation de production (2) au moyen d'un système de planification de l'activité (6) de l'installation de production (2), les informations de gestion saisies comprenant une ou plusieurs des informations suivantes : l'achat de matériaux, l'achat de ressources, l'achat de pièces de rechange, la gestion des pièces de rechange, les coûts de livraison, les délais de livraison, les coûts de stockage, les coûts de personnel, ou similaires,
déterminer des mesures de maintenance pour l'installation de production (2) au moyen d'un système de planification de la maintenance (1), comprenant une liste des mesures de maintenance à effectuer, une liste des objets nécessaires pour les mesures de maintenance à effectuer et une liste des objets nécessaires pour les mesures de maintenance à effectuer, une liste des personnes et/ou des équipements impliqués dans les mesures de maintenance, un calendrier des mesures de maintenance à effectuer, l'énumération et/ou l'exécution de commandes de moyens de production et de pièces de rechange, et similaires **caractérisé en ce que**
le système de planification de la maintenance (1) établit un modèle numérique (8) de l'installation de production (2), le modèle numérique (8) étant conçu comme un jumeau numérique de l'installation de production (2) et comprenant les informations du système de planification de la production (3), du système d'automatisation (4), du système de surveillance de l'état (5) et du système de planification de l'activité (6),
les mesures de maintenance étant optimisées au moyen du modèle numérique (8) en ce qui concerne une exploitation économique de l'installation de production (2) afin d'adapter de manière dynamique le bilan économique global de l'installation de production (2) dans le domaine de la maintenance à la situation de charge actuelle et à celle qui se présentera dans un avenir proche,
la séquence de production déterminée, le contrôle de la production, les états saisis les états détectés, les états prédits et les informations économiques détectées étant interconnectés lors de la détermination des mesures de maintenance.

10. Procédé selon la revendication 9, comprenant en outre l'étape consistant à déterminer les qualités des produits fabriqués dans l'installation de production (2), qui sont de préférence prises en compte lors de la détermination des mesures de maintenance.

11. Procédé selon l'une quelconque des revendications 9 à 10, dans lequel les mesures de maintenance sont optimisées en continu pendant la durée de fonctionnement de l'installation de production (2).

12. Procédé selon l'une quelconque des revendications 9 à 11, dans lequel un plan de maintenance initial comprenant des mesures de maintenance est établi ou mis à disposition, ledit plan de maintenance initial étant basé sur des données historiques provenant de l'installation de production (2) et/ou sur des données provenant d'installations de production (2) comparables.

13. Procédé selon l'une quelconque des revendications 9 à 12, comprenant une étape de saisie manuelle de données par un utilisateur (12), notamment le personnel de maintenance, concernant des opérations de maintenance effectuées, des états ou défauts observés de l'installation de production (2). ou similaires.

14. Procédé selon l'une quelconque des revendications 9 à 13, comprenant l'étape consistant à déterminer les principaux inducteurs de coûts de l'installation de production (2) sur la base des mesures de maintenance déterminées.

15. Programme informatique comprenant des instructions qui, lorsque le programme est exécuté par un ordinateur, amènent ce dernier à exécuter le procédé selon l'une quelconque des revendications 9 à 14.
